Europäisches Patentamt

**European Patent Office**

Office européen des brevets

(11) Veröffentlichungsnummer: **0 265 461**
**B1**

(12) **EUROPÄISCHE PATENTSCHRIFT**

(45) Veröffentlichungstag der Patentschrift:
05.07.89

(21) Anmeldenummer: 87902399.2

(22) Anmeldetag: 15.04.87

(86) Internationale Anmeldenummer:
PCT/DE 87/00175

(87) Internationale Veröffentlichungsnummer:
WO 87/06223 (22.10.87 Gazette 87/23)

(51) Int. Cl.⁴: **C 03 B 23/09**

(54) **VORRICHTUNG ZUM FORMEN DES HALSES VON AUS GLASROHREN HERGESTELLTEN GLASFLASCHEN.**

(30) Priorität: 17.04.86 DE 3613212

(43) Veröffentlichungstag der Anmeldung:
04.05.88 Patentblatt 88/18

(45) Bekanntmachung des Hinweises auf die Patenterteilung:
05.07.89 Patentblatt 89/27

(84) Benannte Vertragsstaaten:
AT BE CH FR GB IT LI NL

(56) Entgegenhaltungen:
DE-A- 3 495 291
DE-B- 1 224 451
DE-B- 1 809 489

(73) Patentinhaber: Dichter, Hans-Joachim,
Sachsendamm 93, D-1000 Berlin 62 (DE)

(72) Erfinder: Dichter, Hans-Joachim, Sachsendamm 93,
D-1000 Berlin 62 (DE)

(74) Vertreter: Böning, Manfred, Dr. Ing. et al, Patentanwälte
Dipl.-Ing. Dieter Jander Dr. Ing. Manfred Böning
Kurfürstendamm 66, D-1000 Berlin 15 (DE)

ACTORUM AG

## Beschreibung

Die Erfindung betrifft eine Vorrichtung zum Formen des Halses einer aus einem Glasrohr hergestellten kleinen Glasflasche mit an senkrecht zur Längsachse der Glasflasche hin- und herbewegbaren Schiebern federnd gelagerten Formgebungsrollen.

Eine Vorrichtung der vorstehenden Art und ähnlichen Aufbaus ist aus der DE-A-12 24 451 bekannt. Es hat sich gezeigt, dass beim Einsatz der bekannten Vorrichtung Probleme auftreten, wenn mit ihr aus vergleichsweise grossen Rohren kleine Glasflaschen hergestellt werden, d. h. wenn Rohre mit einem Durchmesser verarbeitet werden, der etwa 30 mm und mehr beträgt. In solchen Fällen bereitet die Verteilung des aus der Halszone der Glasflasche verdrängten Materials Schwierigkeiten, und es kann zu unzulässigen Massabweichungen bezüglich der Wandstärke der Flaschen im Bereich ihres Rollrandes, ihres Halses und insbesondere ihrer Schultern kommen.

Der Erfindung liegt die Aufgabe zugrunde, eine Vorrichtung der in Betracht gezogenen Gattung zu schaffen, bei der die angedeuteten Probleme eliminiert sind, d. h. mit der sich auf einfache Weise aus Rohren Glasflaschen herstellen lassen, die hinsichtlich ihrer Abmessungen den gestellten Forderungen auch dann genügen, wenn das von den Formgebungsrollen zu verdrängende Glasvolumen verhältnismässig gross ist. Diese Aufgabe wird erfindungsgemäss dadurch gelöst, dass die Schieber in einem parallel zur Längsachse der Glasflasche auf- und abbewegbaren Führungsgestell geführt sind.

Die erfindungsgemässe Vorrichtung gestattet es, erhebliche Materialmengen aus dem Hals- in den Schulterbereich der Glasflasche zu verdrängen und dabei durch eine Bewegung der Formrollen parallel zur Längsachse des Glasrohres dem Entstehen von Verdickungen im Schulterbereich entgegenzuwirken, wobei zusätzlich die Möglichkeit besteht, den Neigungswinkel des Schulterteiles zu variieren. Aufgrund der gleichmässigeren Verteilung des Glasvolumens durch den dem Rollvorgang überlagerten Ziehvorgang lassen sich bei gleichem Materialaufwand Flaschen mit einem grösseren Füllvolumen herstellen als bisher.

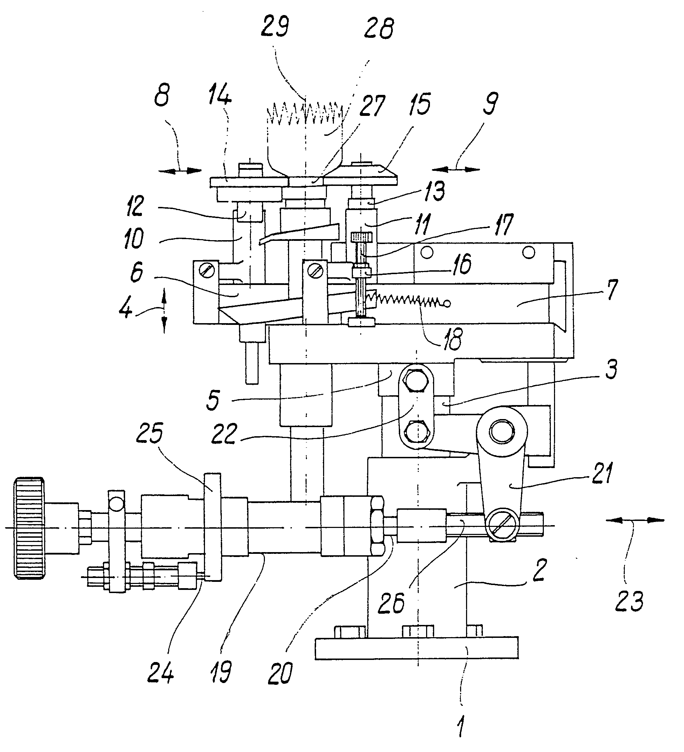

Ein Ausführungsbeispiel der Erfindung ist in der beigefügten Zeichnung dargestellt, in der 1 ein Gestell ist, das eine Konsole 2 für eine Säule 3 trägt, auf der in Richtung des Doppelpfeiles 4 auf- und abverschiebbar ein Führungsgestell 5 für Schieber 6 und 7 gelagert ist, die Hin- und Herbewegungen in Richtungen der Doppelpfeile 8 und 9 ausführen können. Auf den Schiebern 6 und 7 sind Schwenkhülsen 10 und 11 gelagert, die Auslegerarme 12 und 13 tragen, an deren freien Enden Formgebungsrollen 14 und 15 angeordnet sind. Die Höhe der Schwenkhülsen 10 und 11 lässt sich — wie am Beispiel der Schwenkhülse 11 gezeigt — durch eine in einen weiteren Auslegerarm 16 geführte Stellschraube 17 variieren, an der eine am Schieber 7 verankerte Feder 18 angreift, die federnde Ausgleichbewegungen der Schwenkhülse 11 und der von ihr getragenen Formgebungsrolle 15 ermöglicht.

Zum Einleiten der Auf- und Abbewegung in das Führungsgestell 5 in Richtung des Doppelpfeiles 4 dient ein Druckluftaggregat 19, dessen Kolbenstange 20 über einen Winkelhebel 21 und eine Koppellasche 22 mit dem Führungsgestell 5 verbunden ist. Die Grösse der Hin- und Herbewegungen der Kolbenstange 20 in Richtung des Doppelpfeiles 23 lässt sich mit einem verstellbaren Anschlag 24 einstellen, dem ein ortsfestes Widerlager 25 am Druckluftaggregat 19 zugeordnet ist. Um auch eine Höhenverstellung des Führungsgestelles 5 zu ermöglichen, ist auf der Kolbenstange 20 drehbar ein Gewindebolzen 26 gelagert, der in eine am Ende des unteren Armes des Winkelhebels 21 schwenk- und auf- und abbewegbar gelagerte nicht dargestellte Schraubbuchse geschraubt ist.

Beim Formen des Halses 27 einer Glasflasche 28 werden zunächst die Formgebungsrollen 14, 15 senkrecht zur Längsachse 29 der Glasflasche 28 aufeinander zu bewegt. Anschliessend oder gegebenenfalls auch gleichzeitig erfolgt eine Bewegung des Führungsgestells 5 mit den Formgebungsrollen 14, 15 nach unten, um einen Materialstau neben dem Hals 27 abzubauen bzw. zu verhindern. Aufgrund der zusätzlichen Axialbewegungsmöglichkeit der Formgebungsrollen 14, 15 lässt sich eine vergleichsweise breite Materialzone erhitzen, und der Gefahr der Bildung unerwünschter innerer Spannung im Hals- und Schulterbereich der Glasflasche 28 wird entgegengewirkt.

## Patentansprüche

1. Vorrichtung zum Formen des Halses (27) einer aus einem Glasrohr hergestellten kleinen Glasflasche (28) mit an senkrecht zur Längsachse der Glasflasche (28) hin- und herbewegbaren Schiebern (6, 7) federnd gelagerten Formgebungsrollen (14, 15), dadurch gekennzeichnet, dass die Schieber (6, 7) in einem parallel zur Längsachse (29) der Glasflasche (28) auf- und abbewegbaren Führungsgestell (5) geführt sind.

2. Vorrichtung nach Anspruch 1, dadurch gekennzeichnet, dass zur Einleitung der Auf- und Abbewegung in das Führungsgestell (5) ein Druckluftaggregat (19) dient, dessen Kolbenstange (20) über einen Winkelhebel (21) und eine Koppellasche (22) mit dem Führungsgestell (5) verbunden ist.

## Claims

1. A device for shaping the neck (27) of a small glass bottle (28) made from a glass tube, the device comprising shaping rollers (14, 15) resiliently mounted on slides (6, 7) movable in reciprocation perpendicular to the longitudinal axis of the glass bottle (28), characterised in that the slides (6, 7) are guided in a frame (5) movable up and down parallel to the longitudinal axis (29) of the glass bottle (28).

2. A device according to claim 1, characterised in that the up and down motion in the guide frame (5) is initiated by a compressed-air unit (19) having a piston rod (20) connected to the frame (5) by an angle lever (21) and a coupling plate (22).

**Revendications**

1. Dispositif de formage de col (27) d'un flacon de verre (28) réalisé à partir d'un tube de verre, comportant des rouleaux de formage (14, 15) montés de manière élastique sur des poussoirs (6, 7) se déplaçant avec un mouvement de va-et-vient, perpendiculairement à l'axe longitudinal du flacon de verre (28), caractérisé en ce que les poussoirs (6, 7) sont guidés dans un châssis de guidage (5) se déplaçant avec un mouvement ascendant et descendant, parallèlement à l'axe longitudinal (29) du flacon de verre (28).

2. Dispositif selon la revendication 1, caractérisé en ce que pour amorcer le mouvement de montée et de descente vers le châssis de guidage (5), on a recours à un groupe à air comprimé (19) dont la tige de piston (20) est reliée au châssis de guidage (5), par un levier coudé (21) et une biellette de liaison (22).